# EUROPEAN PATENT SPECIFICATION

(11) **EP 2 521 320 B1**
(45) Date of publication and mention of the grant of the patent: **17.06.2015**
(21) Application number: 10840449.2
(22) Date of filing: 19.11.2010
(51) Int. Cl.: H04L 12/70, H04L 12/66, H04L 29/06

(54) **METHOD AND DEVICE FOR MAINTAINING CALL DURING MAIN/STANDBY SWITCHING OF VOICE OVER INTERNET PROTOCOL DEVICES**
VERFAHREN UND VORRICHTUNG ZUR BEWAHRUNG EINES ANRUFES WÄHREND EINER HAUPT-/STANDBY-UMSCHALTUNG VON VOIP-VORRICHTUNGEN
PROCÉDÉ ET DISPOSITIF DE MAINTIEN DE COMMUNICATION PENDANT COMMUTATION PRINCIPALE/D'ATTENTE DE DISPOSITIFS DE VOIX SUR PROTOCOLE INTERNET

(30) Priority: 28.12.2009 CN 200910260290
(43) Date of publication of application: 07.11.2012
(73) Proprietor: ZTE Corporation, Shenzhen City, Guangdong Province 518057 (CN)
(72) Inventor: CHEN, Liang, Shenzhen City Guangdong Province 518057 (CN)
(74) Representative: Zerbi, Guido Maria
(86) International application number: PCT/CN2010/078915
(87) International publication number: WO 2011/079660

(56) References cited:
- CN-A- 1 525 703
- CN-A- 1 855 916
- CN-A- 101 051 883
- CN-A- 101 594 258
- US-A1- 2007 076 594
- US-A1- 2007 183 314
- US-A1- 2009 201 909

## Description

### Technical Field

The present invention belongs to the field of communication technology, and particularly, relates to an implementation method and device for maintaining a good call state during main/standby switching of a Voice over Internet Protocol (VoIP) device. Related technologies are known from US 2007/076594 A1, US 2009/201909 A1 and US 2007/183314 A1.

### Background of the Related Art

With the large-scale application of computer technology and the continuous development of communication technology, requirements on performance and reliability of communications services for all walks of life are also increased. The Next Generation Network (NGN), whose core is soft switch, is an integrated and open network architecture that can provide various services such as voice, data, video and multimedia services based on packet technology, and the NGN represents the development direction of communication networks. A VoIP access device belongs to an access layer in the NGN hierarchical structure, and provides end-to-end VoIP services and other communication services for terminal users.

The design scheme of main and standby protection is generally used for key processing resources in a communication system device, and the object is to improve reliability of communication devices and protection processing ability for handling abnormal situations. However, since the main/standby switching process relates to many complicated flows such as switching between a main hardware signal and a standby hardware signal, system state transition and service call data migration and so on, even though voice services before and after the main and standby switching process can be maintained, a 3∼5 second quiesced state is always accompanied, that is, bidirectional voice streams are interrupted for 3∼5 seconds.

The VoIP service has extremely harsh requirements on the instantaneity and reliability, a 3∼5 second traffic stream interruption is unacceptable to the existing network operation devices, and the operators and terminal users both hope to drive the technology in a more reliable development direction.

Therefore, the technology for implementing lossless calls during main/ standby switching of a VoIP device is designed in the present invention.

### Summary of the Invention

The technical problem required to be solved is to provide a method and device for maintaining calls during main/standby switching of a VoIP device, to improve the instantaneity and reliability of a VoIP service.

The features of the method and apparatus according to the present invention are defined in the independent claims. Further improvements and embodiments are provided in the dependent claims.

Provided is a method for maintaining calls during main/standby switching of a VoIP device, characterized by comprising:
a media address unit configuration step, comprising: configuring a same media IP address and Media Access Control (MAC) address for a main media address translation unit and a standby media address translation unit, and dividing the standby media address translation unit into an interior Virtual Local Area Network (VLAN) and an exterior VLAN, wherein, the interior VLAN provides the standby media address translation unit to send a free Address Resolution Protocol (ARP) packet to a media resource processing unit, and the exterior VLAN provides the standby media address translation unit to send a free ARP packet to an uplink switch;
a media address unit ARP packet triggering step, comprising: when occurrence of main/standby switching of the VoIP device is detected, switching a state of the standby media address translation unit to a main state, and triggering the standby media address translation unit to broadcast a free ARP packet through the interior VLAN and the exterior VLAN; wherein, the free ARP packet is formed using an external media IP address and MAC address of the VoIP device as a source; and
a media resource processing unit ARP packet triggering step, comprising: when the occurrence of main/standby switching of the VoIP device is detected, triggering the media resource processing unit to broadcast a free ARP packet through the interior VLAN; wherein, the free ARP packet is formed using an internal media IP address and MAC address of the media resource processing unit as the source.

The media address unit configuration step further comprises:
dividing the main media address translation unit into an interior VLAN and an exterior VLAN, wherein, the interior VLAN provides the main media address translation unit to send a free ARP packet to the media resource processing unit, and the exterior VLAN provides the main media address translation unit to send a free ARP packet to the uplink switch.

The media address unit configuration step further comprises:
configuring media port isolation for both the main media address translation unit and the standby media address translation unit.

In the media address unit ARP packet triggering step, the occurrence of the main/standby switching of the VoIP device is detected using the following way:
detecting a main/standby state identifier semaphore, and if the main/standby state identifier semaphore is changed, determining that the main/standby switching occurs.

In the media resource processing unit ARP packet triggering step, the occurrence of the main/standby switching of the VoIP device is detected using the following way:
detecting a main control board slot identifier information quantity, and if the main control board slot identifier information quantity is changed, determining that the main/standby switching occurs.

Also provided is a device for maintaining calls during main/standby switching of a VoIP device, characterized by comprising comprising:
a media address unit configuration module, configured to: configure a same media IP address and Media Access Control (MAC) address for a main media address translation unit and a standby media address translation unit, and divide both the main media address translation unit and standby media address translation unit into an interior Virtual Local Area Network (VLAN) and an exterior VLAN, wherein, the interior VLAN provides the main media address translation unit and the standby media address translation unit to send a free ARP packet to a media resource processing unit, and the exterior VLAN provides the main media address translation unit and the standby media address translation unit to send a free ARP packet to an uplink switch;
a media address unit ARP packet triggering module, configured to: when occurrence of main/standby switching of the VoIP device is detected, switch a state of the standby media address translation unit to a main state, and trigger the standby media address translation unit to broadcast a free ARP packet through the interior VLAN and the exterior VLAN; wherein, the free ARP packet is formed using an external media IP address and MAC address of the VoIP device as a source; and
a media resource processing unit ARP packet triggering module, configured to: when the occurrence of main/standby switching of the VoIP device is detected, trigger the media resource processing unit to broadcast a free ARP packet through the interior VLAN; wherein, the free ARP packet is formed using an internal media IP address and MAC address of the media resource processing unit as the source.

The media address unit ARP packet triggering module is configured to detect the occurrence of main/standby switching of the VoIP device according to the following way:
detecting a main/standby state identifier semaphore, and if the main/standby state identifier semaphore is changed, determining that the main/standby switching occurs.

The media address unit ARP packet triggering module uses a 10ms timer to detect the main/standby state identifier semaphore periodically.

Wherein, the media resource processing unit ARP packet triggering module is configured to detect the occurrence of main/standby switching of the VoIP device according to the following way:
detecting a main control board slot identifier information quantity, and if the main control board slot identifier information quantity is changed, determining that the main/standby switching occurs.

The media resource processing unit ARP packet triggering module uses the 10ms timer to detect the main control board slot identifier information quantity periodically.

It can be seen from the above description, with the method and device for maintaining calls during the main/standby switching of the VoIP device, by dividing a media address translation unit into the interior VLAN and exterior VLAN, then detecting a main/standby switching state in real time bidirectionally, when occurrence of the main/standby switching is detected, switching an original standby media address translation unit from a standby state to a main state immediately, and triggering the original standby media address translation unit to begin to broadcast the free ARP packet through the interior VLAN and exterior VLAN, the media resource processing unit begins to broadcast the free ARP packet through the interior VLAN of the media resource processing unit, therefore, two ends of the VOIP service can learn the MAC address of the opposite end promptly, which guarantees timely recovery of a bidirectional voice stream, and implements basically lossless calls during the main/standby switching of the VoIP device.

### Brief Description of Drawings

FIG. 1 is a flow diagram of a preferred example of the method.
FIG. 2 is a structure diagram of a preferred example of the device.
FIG. 3 is a schematic diagram of a media stream before and after main/standby switching of a VoIP device.
FIG. 4 is a schematic diagram of dividing the VLAN.
FIG. 5 is a schematic diagram of the process of a media address translation unit detecting the main/standby switching.
FIG. 6 is a schematic diagram of a media resource board detecting the main/standby hardware signals.
FIG. 7 is a schematic diagram of the process of a media address translation unit broadcasting a free ARP packet.
FIG. 8 is a schematic diagram of the process of a media resource processing unit broadcasting a free ARP packet.
FIG. 9 is a schematic diagram of the voice recovery process.

### Preferred Embodiments of the Present Invention

The present invention will be further described in detail in combination with the accompanying drawings and specific examples below. It should be noted that the examples in the present invention and the technical characteristics in the examples can be optionally combined with each other in the condition of no conflict.

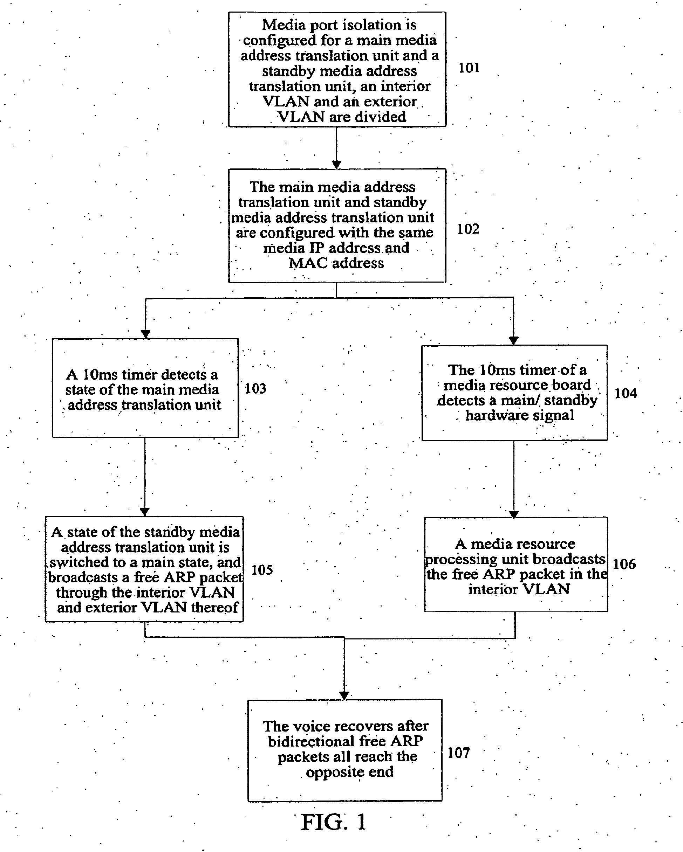

The problem required to be solved is the problem of voice stream interruption during main/standby switching of a VoIP device. FIG. 1 is a flow diagram of a preferred example of the method, and as shown in FIG. 1, the method for maintaining calls during the main/standby switching of the VoIP device in the present document specifically includes the following steps.

In step 101, media port isolation is configured for a main media address translation unit and a standby media address translation unit, an interior Virtual Local Area Network (VLAN) and an exterior VLAN are divided, and the specific steps are as follows.
1. Media switch ports of the main media address translation unit and standby media address translation unit are connected with an uplink port of the VoIP device through an Ethernet switch chip on a main/standby control board.
2. The media switch port of the main media address translation unit and standby media address translation unit is connected with a media resource board through the Ethernet switch chip.
3. A port isolation function between the media switch port of the main media address translation unit and the media switch port of the standby media address translation unit is configured on the Ethernet switch chip, so as to make a connection between the main media address translation unit and the uplink port independent from a connection between the standby media address translation unit and the uplink port. Then, the main media address translation unit and standby media address translation unit are configured with the interior VLAN and exterior VLAN on the switch chip respectively.

In step 102, the main media address translation unit and standby media address translation unit are configured with the same media IP address and MAC address.

An Ethernet attribute of the media switch port on a media address translation unit is an external attribute of the VoIP device, which should not be perceptive for the external network environment before and after the main/standby switching, that is, the IP address representing layer 3 routing attribute and the MAC address representing layer 2 switch attribute should not be changed. Therefore, the media switch ports of the main media address translation unit and standby media address translation unit are configured with the same IP address and MAC address, and the external attribute is not changed before and after the main/standby switching.

In step 103, a 10ms timer of the standby media address translation unit is used for detecting a state of the main media address translation unit, if the state of the main media address translation unit is changed, it means that the VoIP device has the main/standby switching, and step 105 is started to be executed. The process of the 10ms timer of the standby media address translation unit being used for detecting the state of the main media address translation unit specifically includes the following steps.
1. The configurations required by the media address translation unit are configured to the standby media address translation unit.
2. The 10ms timer detects a main/standby state identifier semaphore, if the main/standby state identifier semaphore is changed, step 3 is executed.
3. Each task state of the standby media address translation unit is transferred from a standby state to a main state.

In step 104, the 10ms timer of the media resource board is used for detecting a main hardware signal and a standby hardware signal, that is, for detecting whether the main/standby switching occurs in the VoIP device, and if the occurrence of the main/standby switching is detected, step 106 is started to be executed. The step 104 specifically includes the following processes.
1. The hardware provides a signal identifier of slot information of a main control board, the media resource board judges a change of the slot information of the main control board by the identifier signal, if the slot information is changed, the main/standby switching occurs certainly.
2. The 10ms timer detects a main control board slot identifier information quantity, and if the main control board slot identifier information quantity is changed, a media resource processing unit is informed of the occurrence of the main/standby switching immediately

In step 105, a state of the standby media address translation unit is switched from the standby state to the main state and the standby media address translation unit becomes a new main media address translation unit, the new main media address translation unit broadcasts a free ARP packet through the interior VLAN and exterior VLAN of the new main media address translation unit promptly, and step 107 is executed. The step 105 specifically includes the following processes.
1. In the main/standby switching process, since physical switching between a main Ethernet switch chip and a standby Ethernet switch chip is related, 10∼15ms momentary interruption will exist in Ethernet packet switching.
2. After the 10ms timer of the standby media address translation unit detects that the main state is changed, the task state of the standby media address translation unit is transferred to the main state.
3. An external media IP address and MAC address of the VoIP device are used as a source to form the free Address Resolution Protocol (ARP) packet to broadcast in the interior VLAN, the free ARP packet is broadcasted for 10 times in total after the main/standby switching, and the broadcast is performed once per 0.1s in the first 5 times and once per 10s in the last 5 times.
4. The external media IP address and MAC address of the VoIP device are used as the source to form the free ARP packet to broadcast in the exterior VLAN, the free ARP packet is broadcasted for 10 times in total after the main/standby switching, and the broadcast is performed once per 0.1s in the first 5 times and once per 20s in the last 5 times.
5. Hereafter, a normal anti-aging flow is entered, and the free ARP packet is broadcasted once per 60s.

In step 106, the media resource processing unit broadcasts the free ARP packet in the interior VLAN, and step 107 is executed. The step 106 specifically includes the following processes.
1. In the main/standby switching process, since the physical switching between the main Ethernet switch chip and standby Ethernet switch chip is related, 10∼15ms momentary interruption will exist in the Ethernet packet switching.
2. After the 10ms timer of the media resource board detects that the main hardware signal and standby hardware signal are changed, that is, the signal identifier of slot information of the main control board is changed, the media resource processing unit is informed.
3. According to service data configuration contents, the media resource processing unit uses an internal media IP address and MAC address of the media resource processing unit as a source to form the free ARP packet to broadcast in the interior VLAN.
4. The free ARP packet is broadcasted for 10 times in total after the main/standby switching, and the broadcast is performed once per 0.1s in the first 5 times and once per 10s in the last 5 times.
5. Hereafter, the normal anti-aging flow is entered, and the free ARP packet is broadcasted once per 60s.

In step 107, the voice recovers after bidirectional free ARP packets all reach the opposite end and the step specifically includes the following steps
1. After the free ARP packet of the media address translation unit reaches the media resource processing unit in the interior VLAN, the media resource processing unit updates contents of an ARP table of the media resource processing unit.
2. A voice stream sent from the media resource processing unit to the media address translation unit recovers.
3. After the free ARP packet of the media address translation unit reaches an uplink switch/router in the exterior VLAN, the switch/router updates the contents of the ARP table of the switch/router.
4. After the free ARP packet of the media resource processing unit reaches the media address translation unit in the interior VLAN, since the new media address translation unit does not have an ARP entry of the media resource processing unit, the ARP table is required to be inserted.
5. The media address translation unit learns the MAC address of the media resource processing unit, and a voice stream sent from the media address translation unit to the media resource processing unit recovers.
6. The bidirectional voice streams recover, and the voice recovers.

Wherein, step 103 and step 104 are executed simultaneously.

It can be known from the above description, in the method of the present document, by detecting a main switching signal and a standby switching signal in real time bidirectionally, and the free ARP packets are broadcasted actively in the belonging VLAN after the triggering condition is detected, so as to make two ends of the VoIP service can learn the MAC address of the opposite end immediately, thereby guaranteeing the recovery of bidirectional voice streams and implementing lossless calls during the main/standby switching of the VoIP device.

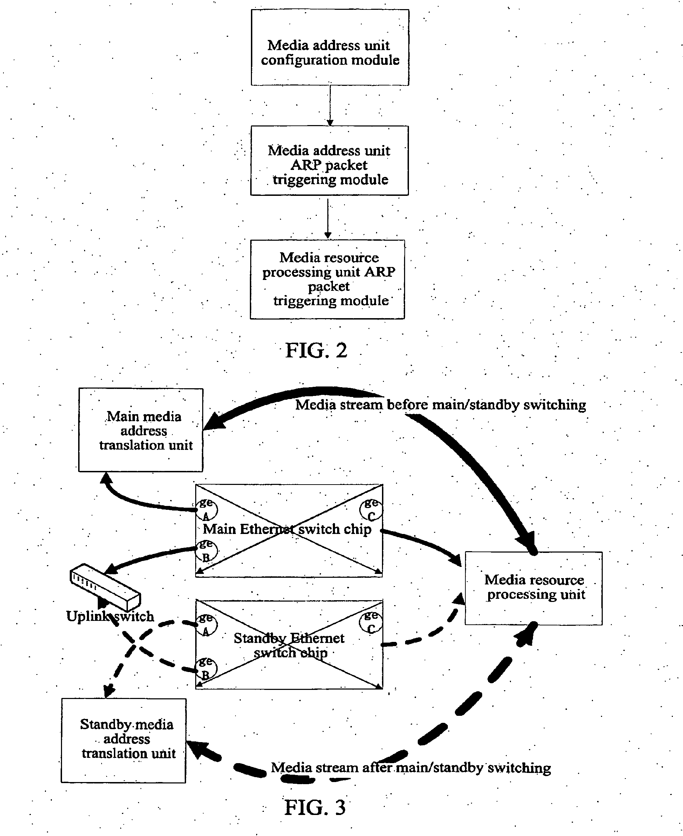

FIG. 2 is a structure diagram of a preferred example of the device, and as shown in FIG. 2, the device for maintaining calls during main/standby switching of a Voice over Internet Protocol (VoIP) device in the present document specifically includes: a media address unit configuration module, a media address unit ARP packet triggering module and a media resource processing unit ARP packet triggering module.

Wherein, the media address unit configuration module is configured to: configure the same media IP address and MAC address for a main media address translation unit and a standby media address translation unit, and divide the main media address translation unit and standby media address translation unit into an interior VLAN and an exterior VLAN, wherein, the interior VLAN provides the main media address translation unit and standby media address translation unit to send a free ARP packet to a media resource processing unit, and the exterior VLAN provides the main media address translation unit and standby media address translation unit to send the free ARP packet to an uplink switch.

The media address unit ARP packet triggering module is configured to: when the occurrence of main/standby switching of the VoIP device is detected, switch a state of the standby media address translation unit to a main state, and trigger the standby media address translation unit to broadcast the free ARP packet through the interior VLAN and exterior VLAN. The free ARP packet is formed with an external media IP address and MAC address of the VoIP device as a source. The media address unit ARP packet triggering module is configured to detect the occurrence of main/standby switching of the VoIP device according to the following way: using a 10ms timer to detect a main/standby state identifier semaphore periodically, and if the main/standby state identifier semaphore is changed, considering that the main/standby switching occurs.

The media resource processing unit ARP packet triggering module is configured to: when the occurrence of main/standby switching of the VoIP device is detected, trigger the media resource processing unit to broadcast the free ARP packet through the interior VLAN. The free ARP packet is formed with an internal media IP address and MAC address of the media resource processing unit as a source. The method used for the media resource processing unit ARP packet triggering module detecting the occurrence of main/standby switching of the VoIP device is: using the 10ms timer to detect a main control board slot identifier information quantity, and if the main control board slot identifier information quantity is changed, determining that the main/standby switching occurs.

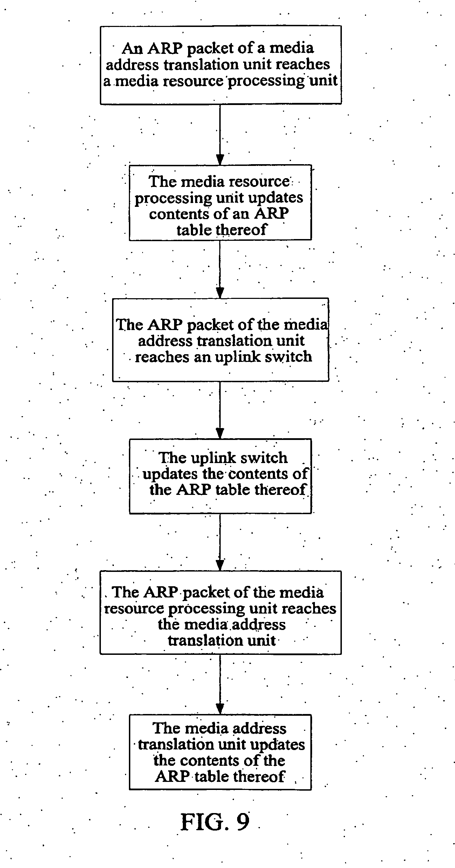

The specific implementation in the present document will be further described in detail in combination with FIG. 3∼FIG. 9 below.

In the VoIP device, generating and interacting a VOIP includes the followings steps.
1. A subscriber line unit generates a Time Division Multiplexing (TDM) voice signal
2. The media resource processing unit is responsible for converting the TDM voice signal into a VoIP voice packet.
3. The VoIP voice packet is switched to a media address translation unit through an Ethernet switch chip.
4. If it is an external call, step 5 is executed, otherwise step 6 is executed.
5. The media address translation unit executes the external network address translation, and replaces a source IP with an external IP of the voice device.
6. A destination IP is replaced with an IP address of the media resource processing unit, and the source IP is replaced with an address of the media address translation unit.
7. The VoIP voice packet is switched to the media resource processing unit through the Ethernet switch chip.
8. The media resource processing unit converts the VoIP voice packet into the TDM voice signal.
9. The subscriber line unit restores the TDM voice signal into the voice to transmit to a phone.

The present document relates to the above step 3∼step 7.

FIG. 3 is a schematic diagram of a media stream before and after main/standby switching of a VoIP device. Ports of the Ethernet switch chip are geA∼geN, wherein, N is the number of ports of the Ethernet switch chip, A, B and C represent a specific number respectively, and the used distribution can be illustrated as that:
a. the media address translation unit is connected with the geA;
b. the media resource processing unit is connected with the geC;
c. the uplink switch is connected with the geB;
d. the VoIP streams are interacted at the geA and geC and switched to the external network through the geB.

Wherein, the mode of docking ports between a standby Ethernet switch chip and the media address translation unit, media resource processing unit and uplink switch is consistent with the mode of corresponding docking ports of a main Ethernet switch chip. The media stream before the main/standby switching is as shown as the full line in FIG. 3, and the media stream after the main/standby switching is as shown as the dotted line in FIG. 3.

After the main/standby switching of the VoIP device, the Ethernet switch chip completes the main/standby switching in 10∼15ms, and after the bidirectional voice streams of the media address translation unit and media resource processing unit recover, the VOIP recovers.

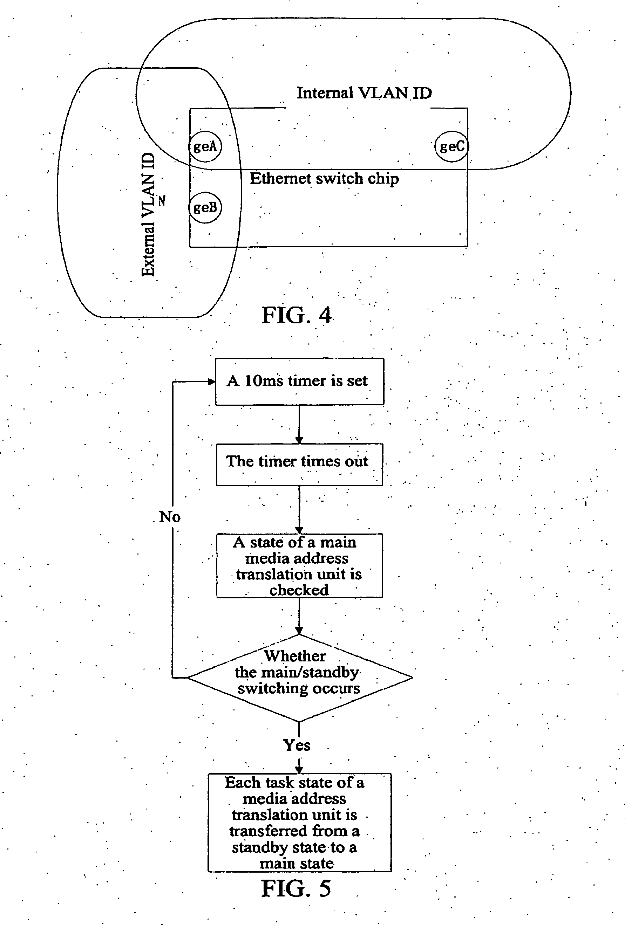

FIG. 4 is a schematic diagram of dividing the VLAN.

The VLAN is a switching technology of dividing different users in the same physical local area network logically into different broadcast domains, the broadcast and unicast traffics inside one VLAN will not be forwarded to other VLANs, thereby contributing to controlling the traffic, reducing the equipment investment, simplifying the network management and enhancing the network security.

The division of the VLAN is set in the Ethernet switch chip, the geA and geC connecting the media address translation unit and media resource processing unit with the Ethernet switch chip are divided as an internal VLAN Identity (ID), and internal media streams are forwarded in the internal VLAN ID. The geA and geB connecting the media address translation unit and uplink switch with the Ethernet switch chip are divided as an external VLAN ID, and the media stream between VoIP devices are forwarded in the external VLAN ID.

FIG. 5 is a schematic diagram of the process of a media address translation unit detecting the main/standby switching. The media address translation unit detecting the occurrence of the main/standby switching is implemented through a standby media address translation unit unit detecting a state change of a main media address translation unit, and once the standby media address translation unit detects that the state of the main media address translation unit is not a main state any more, the standby media address translation unit switches the state of itself to the main state. In order to make the new main media address translation unit after the main/standby switching can execute a function of address translation immediately, configuration data of the main media address translation unit need to be configured to the standby media address translation unit when the standby media address translation unit is started.

After the standby media address translation unit is started and the configuration is completed, a 10ms timer is started, a main/standby state of the main media address translation unit is detected periodically, and the main/standby state of the media address translation unit is judged through a main/standby state identifier semaphore. The identifier semaphore is controlled by a control board hardware scan interface, after a scanning result is changed, a main/standby state identifier signal wire of the standby media address translation unit is pulled up, and after the 10ms timer of the standby media address translation unit times out, the occurrence of the main/standby switching is detected, and each task state of the standby media address translation unit is transferred from the standby state to the main state.

If the occurrence of the main/standby switching is not detected, 10ms is taken as a period, and the state of the main media address translation unit is detected periodically.

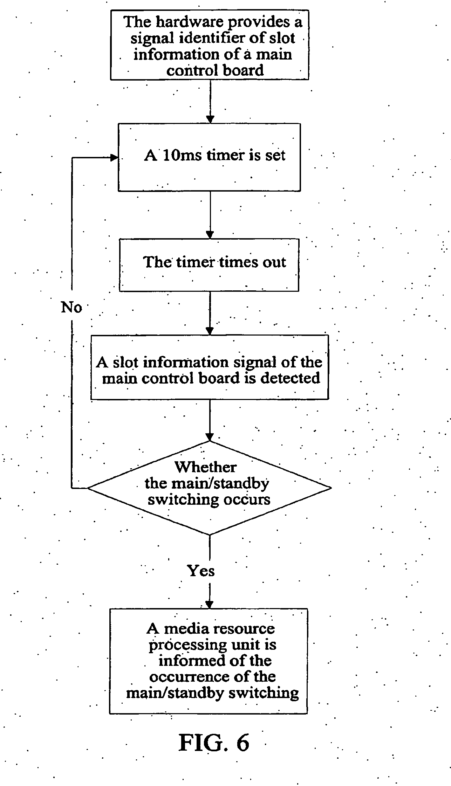

FIG. 6 is a schematic diagram of a media resource board detecting the main/standby hardware signals. If the occurrence of the main/standby switching needs to be detected immediately after the main/standby switching occurs in the VoIP device, except the detection of the above media address translation unit, the detection of the side of the media resource board is also required, and an active ARP flow of the media resource board is also triggered, thus the VoIP can be recovered. Physical slot information of a main control board and a standby control board in the VoIP device is fixed, the hardware provides a signal identifier of slot information of the main control board, if the signal identifier is 1, it is indicated that a left slot control board is in the main state, and if the signal identifier is 0, it is indicated that a right slot control board is in the main state.

The media resource board judges a change of the slot information of the main control board through an identifier signal, and if the identifier signal is changed and a value 0 or 1 is taken, the main/standby switching occurs certainly. After detecting the main/standby switching, the control board hardware scan interface pulls up/pulls down the main/standby state identifier signal wire of the media resource board, after a10ms timer of the media resource board times out, a main control board slot identifier information quantity is detected, and if the main control board slot identifier information quantity is changed, the media resource processing unit is informed of the occurrence of the main/standby switching, and the media resource processing unit broadcasts a free ARP packet externally.

If the occurrence of the main/standby switching is not detected, 10ms is taken as a period to detect the slot information state of the main control board periodically.

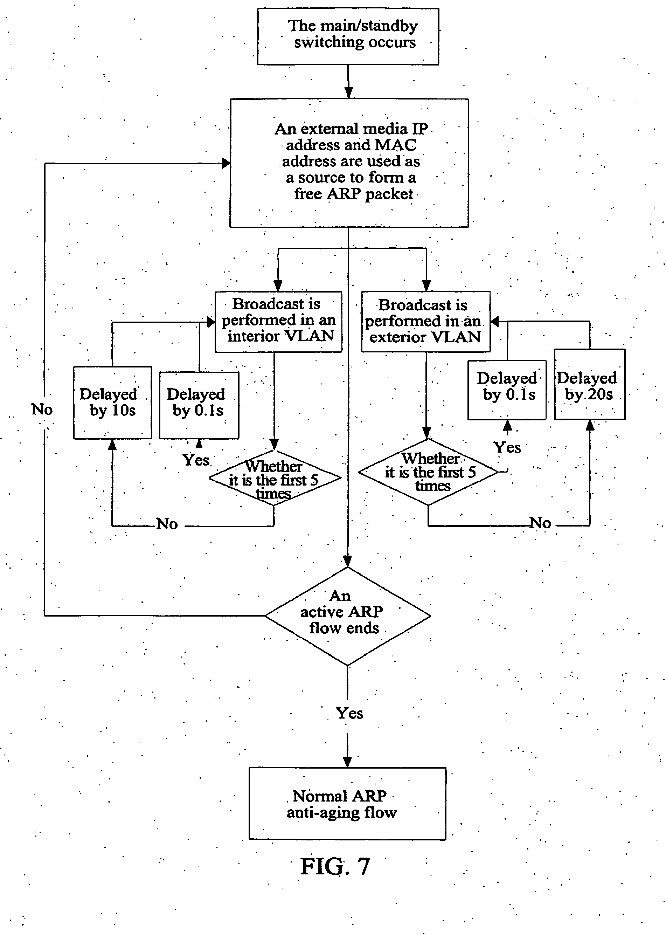

FIG. 7 is a schematic diagram of the process of a media address translation unit broadcasting a free ARP packet.

The free ARP is a characteristic of the ARP and refers to a host computer sending the ARP to search for its own IP address, that is, one ARP request is broadcasted in the current VLAN and the source IP and destination IP of the request are both the host computer itself. During ARP realization, if the host computer receives the ARP request of a certain IP address, and the ARP request was already in the cache of the receiver, thus, the source MAC address in the ARP request needs to be used to update corresponding contents in the cache. In the present document, the characteristic is used, and other host computers are informed to update the hardware addresses in the cache of the ARP through the free ARP.

A standby media address translation unit starts a 10ms timer, detects a state of a main media address translation unit circularly, and after a change of the state of the main media address translation unit is detected, switches the self task state to a main state, and triggers an active ARP flow of the standby media address translation unit. Since the media address translation unit is located at a position where internal and external connections interact in the VoIP device, the active ARP flow needs to be performed in an interior VLAN and exterior VLAN simultaneously.

An external media IP address and MAC address of the VoIP device are used as a source to form the free ARP packet to broadcast in the interior VLAN, the free ARP packet is broadcasted for 10 times in total after the main/standby switching, and since the VoIP needs to be recovered promptly, the free ARP packet is required to be sent for multiple times swiftly after the main/standby switching is detected, but the sending also can not be performed too frequently. The restriction of the VoIP device on the number of broadcast packets is 100 per second, after the free ARP packet is sent multiple times, it can be considered that the opposite end has learned the address of the current end, and the speed of the free ARP packet is slowed. Therefore, in the example, it is adopted to broadcast once per 0.1s in the first 5 times and once per 10s in the last 5 times.

Meanwhile, the external media IP address and MAC address of the VoIP device are used as the source to form the free ARP packet to broadcast in the exterior VLAN. The free ARP packet is broadcasted 10 times in total after the main/standby switching, and the broadcast is performed one time per 0.1s in the first 5 times and one time per 20s in the last 5 times. After the free ARP packet is broadcasted actively for 10 times, it is determined that the active ARP flow is finished, and then broadcast of the free ARP packet in both the interior VLAN and exterior VLAN enters a normal anti-aging flow, that is, the free ARP packet is broadcasted one time per 60s.

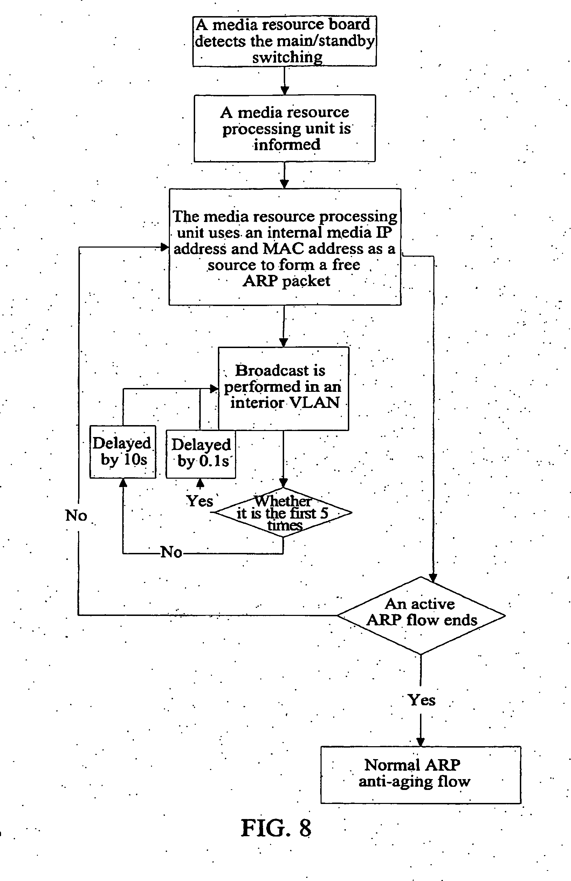

FIG. 8 is a schematic diagram of the process of a media resource processing unit broadcasting a free ARP packet.

A media resource board uses a 10ms timer to detect a hardware signal of slot information change of a main control board periodically. After a change of a main/standby slot signal is detected, since a media stream is processed by the media resource processing unit, the media resource processing unit needs to be informed and completes an active ARP flow. The media resource processing unit is only responsible for processing internal voice streams, and thus, the free ARP packet only needs to be broadcasted in an interior VLAN of the media resource processing unit.

According to service data configuration contents, the media resource processing unit uses an internal media IP address and MAC address of the media resource processing unit as a source to form the free ARP packet to broadcast in the interior VLAN.

The free ARP packet is broadcasted 10 times in total after the main/standby switching, and the broadcast is performed one time per 0.1s in the first 5 times and one time per 10s in the last 5 times. After the free ARP packet is broadcasted actively for 10 times, it is determined that the active ARP flow is finished, and then broadcast of the free ARP packet in the interior VLAN of the media resource processing unit enters a normal anti-aging flow, that is, the free ARP packet is broadcasted one time per 60s.

FIG. 9 is a schematic diagram of the voice recovery process. With regard to an internal phone, after a free ARP packet of a media address translation unit reaches a media resource processing unit in an interior VLAN, the media resource processing unit updates contents of an ARP table of the media resource processing unit, and a voice stream sent from the media resource processing unit to the media address translation unit recovers at the point. With regard to an external phone, after the free ARP packet of the media address translation unit reaches an uplink switch/router in an exterior VLAN, the uplink switch/router updates the contents of the ARP table of the uplink switch/router, and a downlink voice stream recovers.

After the free ARP packet of the media resource processing unit reaches the media address translation unit in the interior VLAN, since the new media address translation unit does not have an ARP entry of the media resource processing unit, the ARP table cache is required to be inserted, the media address translation unit learns a MAC address of the media resource processing unit, and a voice stream sent from the media address translation unit to the media resource processing unit recovers. After the bidirectional voice streams recover, the end-to-end VoIP recovers, and a user determines that the voice recovers.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form

In the above specific examples, the object, technical scheme and beneficial effects of the present invention are further described in detail. It should be noted that, the above description is only the specific examples of the present invention, and the skilled in the art can make various modifications and transformations according to the present invention without departing from the scope of the claims. Therefore, if these modifications and variations of the present invention belong to the scope of the technical scheme recorded in the claims of the present Invention and equivalent techniques thereof, the present invention also.intends to include these modifications and variations.

### Industrial Applicability

With the method and device for maintaining calls during the main/standby switching of the VoIP device of the present invention, by dividing a media address translation unit into the interior VLAN and exterior VLAN, then detecting a main/standby switching state in real time bidirectionally, when the occurrence of the main/standby switching is detected, switching an original standby media address translation unit from a standby state to a main state immediately, and triggering the original standby media address translation unit to begin to broadcast the free ARP packet through the interior VLAN and exterior VLAN, the media resource processing unit begins to broadcast the free ARP packet through the interior VLAN of the media resource processing unit, therefore, two ends of the VOIP service can learn the MAC address of the opposite end promptly, which guarantees timely recovery of a bidirectional voice stream, and implements basically lossless calls during the main/standby switching of the VoIP device.

## Claims

1. A method for maintaining calls during main/standby switching of a VoIP device, **characterized by** comprising:
a media address unit configuration step, comprising: configuring a same media IP address and Media Access Control MAC address for a main media address translation unit and a standby media address translation unit (102), and dividing the standby media address translation unit into an interior Virtual Local Area Network VLAN and an exterior VLAN, wherein, the interior VLAN provides the standby media address translation unit to send a free Address Resolution Protocol ARP packet to a media resource processing unit, and the exterior VLAN provides the standby media address translation unit to send a free ARP packet to an uplink switch;
a media address unit ARP packet triggering step, comprising: when occurrence of main/standby switching of the VoIP device is detected, switching a state of the standby media address translation unit to a main state, and triggering the standby media address translation unit to broadcast a free ARP packet through the interior VLAN and the exterior VLAN (105); wherein, the free ARP packet is formed using an external media IP address and MAC address of the VoIP device as a source; and
a media resource processing unit ARP packet triggering step, comprising: when the occurrence of main/standby switching of the VoIP device is detected, triggering the media resource processing unit to broadcast a free ARP packet through the interior VLAN (106); wherein, the free ARP packet is formed using an internal media IP address and MAC address of the media resource processing unit as the source.

2. The method according to claim 1, wherein, the media address unit configuration step further comprises:
dividing the main media address translation unit into an interior VLAN and an exterior VLAN, wherein, the interior VLAN provides the main media address translation unit to send a free ARP packet to the media resource processing unit, and the exterior VLAN provides the main media address translation unit to send a free ARP packet to the uplink switch.

3. The method according to claim 2, wherein, the media address unit configuration step further comprises:
configuring media port isolation for both the main media address translation unit and the standby media address translation unit.

4. The method according to claim 1, wherein, in the media address unit ARP packet triggering step, the occurrence of the main/standby switching of the VoIP device is detected using the following way:
detecting a main/standby state identifier semaphore, and if the main/standby state identifier semaphore is changed, determining that the main/standby switching occurs.

5. The method according to any one of claims 1 to 4, wherein, in the media resource processing unit ARP packet triggering step, the occurrence of the main/standby switching of the VoIP device is detected using the following way:
detecting a main control board slot identifier information quantity, and if the main control board slot identifier information quantity is changed, determining that the main/standby switching occurs.

6. A device for maintaining calls during main/standby switching of a VoIP device, **characterized by** comprising:
a media address unit configuration module, configured to: configure a same media IP address and Media Access Control MAC address for a main media address translation unit and a standby media address translation unit (102), and divide both the main media address translation unit and standby media address translation unit into an interior Virtual Local Area Network VLAN and an exterior VLAN, wherein, the interior VLAN provides the main media address translation unit and the standby media address translation unit to send a free ARP packet to a media resource processing unit, and the exterior VLAN provides the main media address translation unit and the standby media address translation unit to send a free ARP packet to an uplink switch;
a media address unit ARP packet triggering module, configured to: when occurrence of main/standby switching of the VoIP device is detected, switch a state of the standby media address translation unit to a main state, and trigger the standby media address translation unit to broadcast a free ARP packet through the interior VLAN and the exterior VLAN (105); wherein, the free ARP packet is formed using an external media IP address and MAC address of the VoIP device as a source; and
a media resource processing unit ARP packet triggering module, configured to: when the occurrence of main/standby switching of the VoIP device is detected, trigger the media resource processing unit to broadcast a free ARP packet through the interior VLAN (106); wherein, the free ARP packet is formed using an internal media IP address and MAC address of the media resource processing unit as the source.

7. The device according to claim 6, wherein, the media address unit ARP packet triggering module is configured to detect the occurrence of main/standby switching of the VoIP device according to the following way:
detecting a main/standby state identifier semaphore, and if the main/standby state identifier semaphore is changed, determining that the main/standby switching occurs.

8. The device according to claim 7, wherein,
the media address unit ARP packet triggering module uses a 10ms timer to detect the main/standby state identifier semaphore periodically.

9. The device according to claim 6, 7 or 8, wherein, the media resource processing unit ARP packet triggering module is configured to detect the occurrence of main/standby switching of the VoIP device according to the following way:
detecting a main control board slot identifier information quantity, and if the main control board slot identifier information quantity is changed, determining that the main/standby switching occurs.

10. The device according to claim 9, wherein,
the media resource processing unit ARP packet triggering module uses the 10ms timer to detect the main control board slot identifier information quantity periodically.

## Patentansprüche

1. Ein Verfahren zum Bewahren von Anrufen während einer Haupt-/Standby-Umschaltung einer VoIP-Vorrichtung, **dadurch gekennzeichnet, dass** es Folgendes beinhaltet:
einen Medienadresseneinheit-Konfigurationsschritt, der Folgendes beinhaltet: Konfigurieren einer gleichen Medien-IP-Adresse und Medienzugriffssteuerung-MAC-Adresse für eine Haupt-Medienadressen-Übersetzungseinheit und eine Standby-Medienadressen-Übersetzungseinheit (102), und Unterteilen der Standby-Medienadressen-Übersetzungseinheit in ein inneres virtuelles lokales Netzwerk VLAN und ein äußeres VLAN, wobei das innere VLAN die Standby-Medienadressen-Übersetzungseinheit bereitstellt, um ein freies Adressenauflösungsprotokoll-ARP-Paket an eine Medienressourcen-Verarbeitungseinheit zu senden, und das äußere VLAN die Standby-Medienadressen-Übersetzungseinheit bereitstellt, um ein freies ARP-Paket an einen Aufwärtsstrecken-Schalter zu senden;
einen Medienadresseneinheit-ARP-Paket-Auslöseschritt, der Folgendes beinhaltet: wenn das Auftreten einer Haupt-/Standby-Umschaltung der VoIP-Vorrichtung detektiert wird, Umschalten eines Zustands der Standby-Medienadressen-Übersetzungseinheit auf einen Hauptzustand, und Auslösen der Standby-Medienadressen-Übersetzungseinheit, um ein freies ARP-Paket über das innere VLAN und das äußere VLAN (105) zu übertragen; wobei das freie ARP-Paket unter Verwendung einer externen Medien-IP-Adresse und MAC-Adresse der VoIP-Vorrichtung als eine Quelle gebildet wird; und
einen Medienressourcen-Verarbeitungseinheit-ARP-Paket-Auslöseschritt, der Folgendes beinhaltet: wenn das Auftreten einer Haupt-/Standby-Umschaltung der VoIP-Vorrichtung detektiert wird, Auslösen der Medienressourcen-Verarbeitungseinheit, um ein freies ARP-Paket über das innere VLAN (106) zu übertragen; wobei das freie ARP-Paket unter Verwendung einer internen Medien-IP-Adresse und MAC-Adresse der Medienressourcen-Verarbeitungseinheit als der Quelle gebildet wird.

2. Verfahren gemäß Anspruch 1, wobei der Medienadresseneinheit-Konfigurationsschritt ferner Folgendes beinhaltet:
Unterteilen der Haupt-Medienadressen-Übersetzungseinheit in ein inneres VLAN und ein äußeres VLAN, wobei das innere VLAN die Haupt-Medienadressen-Übersetzungseinheit bereitstellt, um ein freies ARP-Paket an die Medienressourcen-Verarbeitungseinheit zu senden, und das äußere VLAN die Haupt-Medienadressen-Übersetzungseinheit bereitstellt, um ein freies ARP-Paket an den Aufwärtsstrecken-Schalter zu senden.

3. Verfahren gemäß Anspruch 2, wobei der Medienadresseneinheit-Konfigurationsschritt ferner Folgendes beinhaltet:
Konfigurieren der Medienportisolation sowohl für die Haupt-Medienadressen-Übersetzungseinheit als auch für die Standby-Medienadressen-Übersetzungseinheit.

4. Verfahren gemäß Anspruch 1, wobei, im Medienadresseneinheit-ARP-Paket-Auslöseschritt, das Auftreten der Haupt-/Standby-Umschaltung der VoIP-Vorrichtung in folgender Weise detektiert wird:
Detektieren eines Haupt-/Standby-Zustandsidentifizierersemaphors, und falls das Haupt-/Standby-Zustandsidentifizierersemaphor geändert wird, Bestimmen, dass die Haupt-/Standby-Umschaltung auftritt.

5. Verfahren gemäß einem der Ansprüche 1 bis 4, wobei, im Medienressourcen-Verarbeitungseinheit-ARP-Paket-Auslöseschritt, das Auftreten der Haupt-/Standby-Umschaltung der VoIP-Vorrichtung in folgender Weise detektiert wird:
Detektieren einer Hauptsteuerplatine-Steckplatz-Identifiziererinformationsmenge, und falls die Hauptsteuerplatine-Steckplatz-Identifiziererinformationsmenge geändert wird, Bestimmen, dass die Haupt-/Standby-Umschaltung auftritt.

6. Eine Vorrichtung zum Bewahren von Anrufen während Haupt-/Standby-Umschaltung einer VoIP-Vorrichtung, **dadurch gekennzeichnet, dass** sie Folgendes beinhaltet:
ein Medienadresseneinheit-Konfigurationsmodul, das konfiguriert ist, um: eine gleiche Medien-IP-Adresse und Medienzugriffssteuerung-MAC-Adresse für eine Haupt-Medienadressen-Übersetzungseinheit und eine Standby-Medienadressen-Übersetzungseinheit (102) zu konfigurieren, und sowohl die Haupt-Medienadressen-Übersetzungseinheit als auch die Standby-Medienadressen-Übersetzungseinheit in ein inneres virtuelles lokales Netzwerk VLAN und ein äußeres VLAN zu unterteilen, wobei das innere VLAN die Haupt-Medienadressen-Übersetzungseinheit und die Standby-Medienadressen-Übersetzungseinheit bereitstellt, um ein freies ARP-Paket an eine Medienressourcen-Verarbeitungseinheit zu senden, und das äußere VLAN die Haupt-Medienadressen-Übersetzungseinheit und die Standby-Medienadressen-Übersetzungseinheit bereitstellt, um ein freies ARP-Paket an einen Aufwärtsstrecken-Schalter zu senden;
ein Medienadresseneinheit-ARP-Paket-Auslösemodul, das konfiguriert ist, um: wenn das Auftreten einer Haupt-/Standby-Umschaltung der VoIP-Vorrichtung detektiert wird,
einen Zustand der Standby-Medienadressen-Übersetzungseinheit auf einen Hauptzustand umzuschalten, und die Standby-Medienadressen-Übersetzungseinheit auszulösen, um ein freies ARP-Paket über das innere VLAN und das äußere VLAN (105) zu übertragen; wobei das freie ARP-Paket unter Verwendung einer externen Medien-IP-Adresse und MAC-Adresse der VoIP-Vorrichtung als eine Quelle gebildet wird; und
ein Medienressourcen-Verarbeitungseinheit-ARP-Paket-Auslösemodul, das konfiguriert ist, um: wenn das Auftreten einer Haupt-/Standby-Umschaltung der VolP-Vorrichtung detektiert wird, die Medienressourcen-Verarbeitungseinheit auszulösen, um ein freies ARP-Paket über das innere VLAN (106) zu übertragen; wobei das freie ARP-Paket unter Verwendung einer internen Medien-IP-Adresse und MAC-Adresse der Medienressourcen-Verarbeitungseinheit als der Quelle gebildet wird.

7. Vorrichtung gemäß Anspruch 6, wobei das Medienadresseneinheit-ARP-Paket-Auslösemodul konfiguriert ist, um das Auftreten der Haupt-/Standby-Umschaltung der VolP-Vorrichtung gemäß folgender Weise zu detektieren:
Detektieren eines Haupt-/Standby-Zustandsidentifizierersemaphors, und falls das Haupt-/Standby-Zustandsidentifizierersemaphor geändert wird, Bestimmen, dass die Haupt-/Standby-Umschaltung auftritt.

8. Vorrichtung gemäß Anspruch 7, wobei
das Medienadresseneinheit-ARP-Paket-Auslösemodul einen 10 ms-Zeitgeber verwendet, um das Haupt-/Standby-Zustandsidentifizierersemaphor periodisch zu detektieren.

9. Vorrichtung gemäß Anspruch 6, 7 oder 8, wobei das Medienressourcen-Verarbeitungseinheit-ARP-Paket-Auslösemodul konfiguriert ist, um das Auftreten der Haupt-/Standby-Umschaltung der VoIP-Vorrichtung gemäß folgender Weise zu detektieren:
Detektieren einer Hauptsteuerplatine-Steckplatz-Identifiziererinformationsmenge, und falls die Hauptsteuerplatine-Steckplatz-Identifiziererinformationsmenge geändert wird, Bestimmen, dass die Haupt-/Standby-Umschaltung auftritt.

10. Vorrichtung gemäß Anspruch 9, wobei
das Medienressourcen-Verarbeitungseinheit-ARP-Paket-Auslösemodul den 10 ms-Zeitgeber verwendet, um die Hauptsteuerplatine-Steckplatz-Identifiziererinformationsmenge periodisch zu detektieren.

## Revendications

1. Une méthode pour maintenir des appels durant une commutation principale/de veille d'un dispositif de VoIP, **caractérisée par** le fait de comprendre :
une étape de configuration d'unité d'adresse de support, comprenant : la configuration d'une même adresse IP de support et adresse de contrôle d'accès au support MAC pour une unité de translation d'adresse de support principale et une unité de translation d'adresse de support de veille (102), et la division de l'unité de translation d'adresse de support de veille en un réseau local virtuel VLAN intérieur et un VLAN extérieur, le VLAN intérieur fournissant l'unité de translation d'adresse de support de veille pour envoyer un paquet de protocole de résolution d'adresse ARP libre à une unité de traitement de ressource de support, et le VLAN extérieur fournissant l'unité de translation d'adresse de support de veille pour envoyer un paquet ARP libre à un commutateur de voie montante ;
une étape de déclenchement de paquet ARP d'unité d'adresse de support, comprenant : lorsqu'un cas de commutation principale/de veille du dispositif VoIP est détecté, la commutation d'un état de l'unité de translation d'adresse de support de veille en un état principal, et le déclenchement de l'unité de translation d'adresse de support de veille pour diffuser un paquet ARP libre à travers le VLAN intérieur et le VLAN extérieur (105) ; le paquet ARP libre étant formé en utilisant une adresse IP de support externe et une adresse MAC du dispositif VoIP comme une source ; et
une étape de déclenchement de paquet ARP d'unité de traitement de ressource de support, comprenant : lorsque le cas de commutation principale/de veille du dispositif VoIP est détecté, le déclenchement de l'unité de traitement de ressource de support pour diffuser un paquet ARP libre à travers le VLAN intérieur (106) ; le paquet ARP libre étant formé en utilisant une adresse IP de support interne et une adresse MAC de l'unité de traitement de ressource de support comme la source.

2. La méthode selon la revendication 1, dans laquelle l'étape de configuration d'unité d'adresse de support comprend en outre :
la division de l'unité de translation d'adresse de support principale en un VLAN intérieur et un VLAN extérieur, le VLAN intérieur fournissant l'unité de translation d'adresse de support principale pour envoyer un paquet ARP libre à l'unité de traitement de ressource de support, et le VLAN extérieur fournissant l'unité de translation d'adresse de support principale pour envoyer un paquet ARP libre au commutateur de voie montante.

3. La méthode selon la revendication 2, dans laquelle l'étape de configuration d'unité d'adresse de support comprend en outre :
la configuration d'une isolation de port de support pour à la fois l'unité de translation d'adresse de support principale et l'unité de translation d'adresse de support de veille.

4. La méthode selon la revendication 1, dans laquelle, dans l'étape de déclenchement de paquet ARP d'unité d'adresse de support, le cas de la commutation principale/de veille du dispositif VoIP est détecté en utilisant la façon suivante :
la détection d'un sémaphore d'identificateur d'état principal/de veille, et si le sémaphore d'identificateur d'état principal/de veille est changé, la détermination que la commutation principale/de veille a lieu.

5. La méthode selon n'importe laquelle des revendications 1 à 4, dans laquelle, dans l'étape de déclenchement de paquet ARP d'unité de traitement de ressource de support, le cas de la commutation principale/de veille du dispositif VoIP est détecté en utilisant la façon suivante :
la détection d'une quantité d'informations d'identificateur de fente de tableau de contrôle principale, et si la quantité d'informations d'identificateur de fente de tableau de contrôle principale est changée, la détermination que la commutation principale/de veille a lieu.

6. Un dispositif pour maintenir des appels durant une commutation principale/de veille d'un dispositif de VoIP, **caractérisé par** le fait de comprendre :
un module de configuration d'unité d'adresse de support, configuré pour : configurer une même adresse IP de support et adresse de contrôle d'accès au support MAC pour une unité de translation d'adresse de support principale et une unité de translation d'adresse de support de veille (102), et diviser à la fois l'unité de translation d'adresse de support principale et l'unité de translation d'adresse de support de veille en un réseau local virtuel VLAN intérieur et un VLAN extérieur, le VLAN intérieur fournissant l'unité de translation d'adresse de support principale et l'unité de translation d'adresse de support de veille pour envoyer un paquet ARP libre à une unité de traitement de ressource de support, et le VLAN extérieur fournissant l'unité de translation d'adresse de support principale et l'unité de translation d'adresse de support de veille pour envoyer un paquet ARP libre à un commutateur de voie montante ;
un module de déclenchement de paquet ARP d'unité d'adresse de support, configuré pour : lorsqu'un cas de commutation principale/de veille du dispositif VoIP est détecté, commuter un état de l'unité de translation d'adresse de support de veille en un état principal, et déclencher l'unité de translation d'adresse de support de veille pour diffuser un paquet ARP libre à travers le VLAN intérieur et le VLAN extérieur (105) ; le paquet ARP libre étant formé en utilisant une adresse IP de support externe et une adresse MAC du dispositif VolP comme source ; et
un module de déclenchement de paquet ARP d'unité de traitement de ressource de support, configuré pour : lorsque le cas de commutation principale/de veille du dispositif VoIP est détecté, déclencher l'unité de traitement de ressource de support pour diffuser un paquet ARP libre à travers le VLAN intérieur (106) ; le paquet ARP libre étant formé en utilisant une adresse IP de support interne et une adresse MAC de l'unité de traitement de ressource de support comme source.

7. Le dispositif selon la revendication 6, dans lequel le module de déclenchement de paquet ARP d'unité d'adresse de support est configuré pour détecter le cas de commutation principale/de veille du dispositif VoIP selon la façon suivante :
la détection d'un sémaphore d'identificateur d'état principal/de veille, et si le sémaphore d'identificateur d'état principal/de veille est changé, la détermination que la commutation principale/de veille a lieu.

8. Le dispositif selon la revendication 7, dans lequel
le module de déclenchement de paquet ARP d'unité d'adresse de support utilise un minuteur de 10 ms pour détecter le sémaphore d'identificateur d'état principal/de veille périodiquement.

9. Le dispositif selon la revendication 6, la revendication 7 ou la revendication 8, dans lequel le module de déclenchement de paquet ARP d'unité de traitement de ressource de support est configuré pour détecter le cas de commutation principale/de veille du dispositif VoIP selon la façon suivante :
la détection d'une quantité d'informations d'identificateur de fente de tableau de contrôle principale, et si la quantité d'informations d'identificateur de fente de tableau de contrôle principale est changée, la détermination que la commutation principale/de veille a lieu.

10. Le dispositif selon la revendication 9, dans lequel
le module de déclenchement de paquet ARP d'unité de traitement de ressource de support utilise le minuteur de 10 ms pour détecter la quantité d'informations d'identificateur de fente de tableau de contrôle principale périodiquement.
